# EUROPEAN PATENT APPLICATION

(11) **EP 4 546 479 A1**
(43) Date of publication of application: **30.04.2025**
(21) Application number: 24788927.2
(22) Date of filing: 27.03.2024
(51) Int. Cl.: H01M 10/04, B65H 20/16, B65H 35/00

(54) **APPARATUS FOR MANUFACTURING SECONDARY BATTERY, AND METHOD FOR MANUFACTURING SECONDARY BATTERY USING SAME**

(30) Priority: 12.04.2023 KR 20230048093
(71) Applicant: LG Energy Solution, Ltd., Seoul 07335 (KR)
(72) Inventor: KIM, Hyun Jung, Daejeon 34122 (KR); BAEK, Ju Hwan, Daejeon 34122 (KR); KEUM, Dong Yeon, Daejeon 34122 (KR); SO, Hee Young, Daejeon 34122 (KR)
(74) Representative: Goddar, Heinz J.
(86) International application number: PCT/KR2024/003814
(87) International publication number: WO 2024/214984

(57) **Abstract**

A secondary battery manufacturing apparatus includes: (1) a clamping machine with a clamp configured to fix an electrode assembly; (2) a transfer rail overlapping the clamping machine; and (3) a tape attachment device coupled to the transfer rail and configured to move along the transfer rail. The tape attachment device includes: (1) a tape gripper configured to apply vacuum pressure to a tape; and (2) side heaters adjacent to ends of the tape gripper.

## Description

### CROSS-REFERENCE TO RELATED APPLICATIONS

The present application is a national phase entry under 37 C.F.R. § 371 of International Application No. PCT/KR2024/003814, which was filed on March 27, 2024 and claims priority to Korean Patent Application No. 10-2023-0048093, filed on April 12, 2023, all of which are incorporated herein by reference.

### TECHNICAL FIELD

The present disclosure relates to a secondary battery manufacturing apparatus and a secondary battery manufacturing method using the same.

### BACKGROUND

**A** secondary battery can be charged and discharged a plurality of times unlike a primary battery. Secondary batteries have been widely used as energy sources for various types of wireless devices such as handsets, laptop computers, and cordless vacuum cleaners. Recently, owing to improved energy density and economies of scale, manufacturing costs of electric-powered hybrid electric vehicles (HEVs) and battery electric vehicles (BEVs) have dramatically decreased and a range of BEVs has increased to the same level as that of fuel vehicles, and thus, a main use of secondary batteries is moving from mobile devices to mobility.

A battery cell is a most basic unit of a secondary battery and thus an improvement of mechanical and electrical performance of the battery cell is a most effective and key factor in improving the performance of the secondary battery. A manufacturing process of an electrode assembly is a most important process in determining the yield and reliability of battery cells.

### SUMMARY [Technical Problem]

The present disclosure is directed to providing an apparatus for manufacturing a secondary battery with improved reliability and a secondary battery manufacturing method using the same.

### [Technical Solution]

Example aspects of the present disclosure provide a secondary battery man3ufacturing apparatus. The secondary battery manufacturing apparatus includes a clamping machine with a clamp configured to fix an electrode assembly, a transfer rail overlapping the clamping machine, and a tape attachment device coupled to the transfer rail and configured to move along the transfer rail, in which the tape attachment device includes a tape gripper configured to apply vacuum pressure to a tape, and side heaters adjacent to ends of the tape gripper.

The clamping machine may further include a shaft coupled to the clamp and configured to rotate the clamp.

The clamping machine may be configured to rotate the clamp such that one of first and second main surfaces of the electrode assembly faces the transfer rail.

The secondary battery manufacturing apparatus may further include a vision inspection device configured to inspect exterior of the electrode assembly.

The vision inspection device may be coupled to the transfer rail.

The secondary battery manufacturing apparatus may further include a tape supply overlapping the transfer rail, spaced apart from the clamping machine, and configured to store the tape.

The tape attachment device may include first arms configured to move the tape gripper relative to the transfer rail, and second arms configured to move the side heaters relative to the transfer rail.

The second arms may be configured to move the side heaters such that a distance between the side heaters and the transfer rail is greater than a distance between the tape gripper and the transfer rail.

The side heaters may be configured to press the tape and the sides of the electrode assembly such that the tape is in contact with the sides of the electrode assembly, and to heat the tape on the sides of the electrode assembly.

Each of the side heaters may include a chamfered portion.

The chamfered portion of each of the side heaters may face the tape gripper.

The tape gripper may be configured to press the tape and the first main surface such that the tape is in contact with the first main surface of the electrode assembly, and to heat the tape on the first main surface of the electrode assembly.

### [Advantageous Effects]

According to example aspects of the present disclosure, damage to an electrode assembly can be prevented during taping of the electrode assembly. Accordingly, the yield and reliability of manufacturing secondary batteries may increase.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

### DESCRIPTION OF THE DRAWINGS

FIG. 1 is a plan view for describing a secondary battery manufacturing apparatus according to example aspects.
FIG. 2 is a side view for describing a secondary battery manufacturing apparatus according to example aspects.
FIG. 3 is a flowchart of a secondary battery manufacturing method according to example aspects.
FIG. 4 is a plan view for describing a secondary battery manufacturing method according to example aspects.
FIG. 5 is a side view for describing a secondary battery manufacturing method according to example aspects.
FIG. 6 is a plan view for describing a secondary battery manufacturing method according to example aspects.
FIG. 7, FIG. 8, and FIG. 9 are side views for describing a secondary battery manufacturing method according to example aspects.
FIG. 10 is a plan view for describing a secondary battery manufacturing method according to example aspects.
FIG. 11 is a side view for describing a secondary battery manufacturing method according to example aspects.
FIG. 12 is a plan view for describing a secondary battery manufacturing method according to example aspects.
FIG. 13 is a side view for describing a secondary battery manufacturing method according to example aspects.
FIG. 14 is a plan view for describing a secondary battery manufacturing method according to example aspects.
FIG. 15, FIG. 16, and FIG. 17 are side views for describing a secondary battery manufacturing method according to example aspects.
FIG. 18 is a plan view for describing a secondary battery manufacturing apparatus according to example aspects.
FIG. 19 is a side view for describing a secondary battery manufacturing apparatus according to example aspects.

### DETAILED DESCRIPTION

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts matching corresponding to the present invention on the basis of the principle that the inventor(s) of the application can appropriately define the terms or expressions to optimally explain the present invention.

Therefore, embodiments set forth herein and configurations illustrated in the drawings are only embodiments of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Aspect)

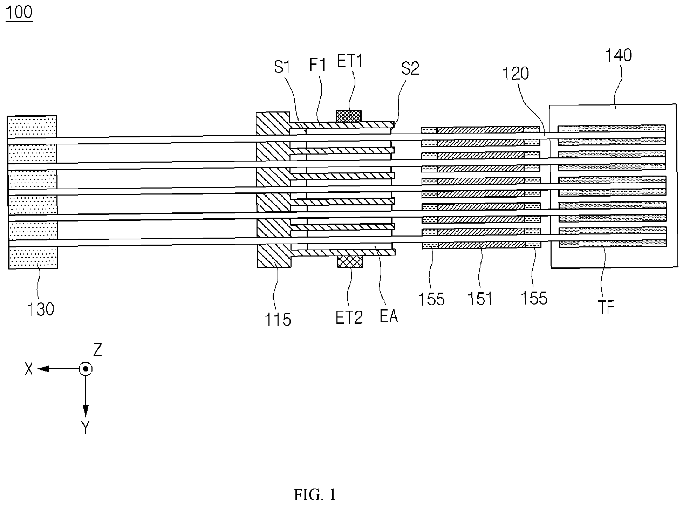

FIG. 1 is a plan view for describing a secondary battery manufacturing apparatus 100 according to example aspects.

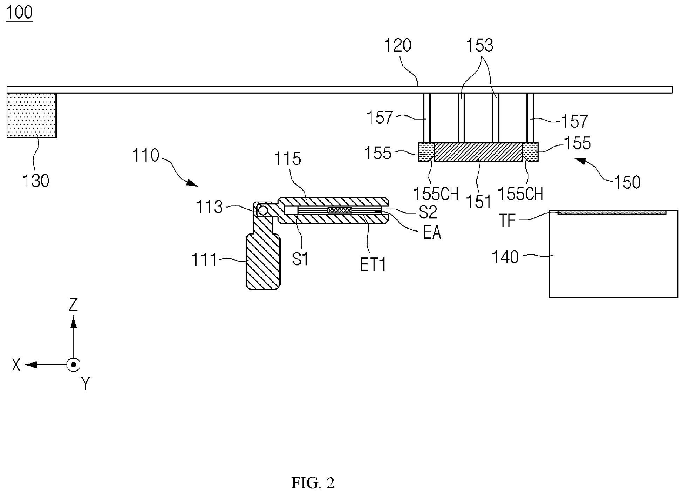

FIG. 2 is a side view for describing the secondary battery manufacturing apparatus 100 according to example aspects.

Referring to FIG. 1 and FIG. 2, the secondary battery manufacturing apparatus 100 may include a clamping machine 110, a transfer rail 120, a vision inspection device 130, a tape supply 140, and a tape attachment device 150.

The secondary battery manufacturing apparatus 100 may be configured to process an electrode assembly EA. The secondary battery manufacturing apparatus 100 may be configured to apply tapes TF to the electrode assembly EA. The secondary battery manufacturing apparatus 100 may be a roller-free apparatus. The secondary battery manufacturing apparatus 100 may be configured to apply the tapes TF to the electrode assembly EA without pressing the tapes TF and the electrode assembly EA using a roller.

The electrode assembly EA may be of a stack type. The stack type electrode assembly EA may include a plurality of positive electrodes and a plurality of negative electrodes that are alternately stacked, and a plurality of separators interposed therebetween. The plurality of separators may prevent a short circuit between the plurality of positive electrodes and the plurality of negative electrodes. To prevent contact between the plurality of positive electrodes and the plurality of negative electrodes, an area of each of the plurality of separators may be larger than an area of each of the plurality of positive electrodes and the plurality of negative electrodes.

The positive electrodes may each include a positive electrode plate and a positive electrode active material. The negative electrodes may each include a negative electrode plate and a negative electrode active material. The positive electrode plate and the negative electrode plate may include coated parts and uncoated parts. The coated parts may be parts of the positive electrode plate coated with the positive electrode active material or parts of the negative electrode plate coated with the negative electrode active material. The uncoated parts may be parts of the positive electrode plate that are not coated with the positive electrode active material (i.e., that are separated from the positive electrode active material) or parts of the negative electrode plate that are not coated with the negative electrode active material (i.e., that are separated from the negative electrode active material). The uncoated parts of the positive electrode plate and the negative electrode plate may include electrode tabs ET1 and ET2 for connection with external devices. For example, the electrode tab ET1 may be a positive electrode tab and the electrode tab ET2 may be a negative electrode tab.

FIG. 1 and FIG. 2 illustrate a bidirectional electrode assembly EA in which the electrode tabs ET1 and ET2 are at opposite sides only for the purpose of illustration, and thus, it should be understood that the technical idea of the present disclosure is not limited thereto in any sense. For example, unidirectional battery cells with electrode tabs on the same side may be processed by the secondary battery manufacturing apparatus 100.

A thickness of the positive electrode plate may range from about 3 µm to about 500 µm. The positive electrode plate may not cause a chemical change in a finally manufactured secondary battery and may have high conductivity. The positive electrode plate may include, for example, stainless steel, nickel, titanium, baked carbon, and aluminum. The positive electrode plate may include stainless steel surface-treated with carbon, nickel, titanium, silver, or the like. A surface of the positive electrode plate may include a fine uneven structure to increase the adhesion of the active material. The positive electrode plate may be in the form of film, sheet, foil, net, porosity, foam, nonwoven fabric or the like.

A thickness of the negative electrode plate may be in a range of about 3 µm to about 500 µm. The negative electrode plate may not cause a chemical change in a finally manufactured secondary battery and may have high conductivity. The negative electrode plate may include copper, stainless steel, aluminum, nickel, titanium, baked carbon, and aluminum-cadmium alloy. The negative electrode plate may include stainless steel surface-treated with carbon, nickel, titanium, silver, or the like. A surface of the negative electrode plate may include a fine uneven structure to increase the adhesion of the active material. The negative electrode plate may be in the form of film, sheet, foil, net, porosity, foam, nonwoven fabric or the like.

A positive electrode active material is a material that may cause an electrochemical reaction. The positive electrode active material may be a lithium transition metal oxide. For example, the positive electrode active material may include: a layered compound substituted with one or more transition metal, e.g., lithium cobalt oxide (LiCoO₂) or lithium nickel oxide (LiNiO₂); lithium manganese oxide substituted with one or more transition metal; lithium nickel-based oxide expressed by a chemical formula of LiNi_{1-y}M_{y}O₂ (here, M is Co, Mn, Al, CU, Fe, Mg, B, Cr, Zn or Ga, and 0.01≤y≤0.7); lithium nickel cobalt manganese compound oxide expressed by a chemical formula of Li_{1+z}Ni_{b}Mn_{c}Co_{1-(b+c+d)}M_{d}O₍₃₋ₑ₎Aₑ, e.g., Li_{1+z}Ni_{1/3}Co_{1/3}Mn_{1/3}O₂ or Li_{1+zN}i_{0.4}Mn_{0.4}Co_{0.2}O₂ (here, -0.5≤z≤0.5, 0.1≤b≤0.8, 0.1≤c≤0.8, 0≤d≤0.2, 0≤e≤0.2, b+c+d<1, M is Al, Mg, Cr, Ti, Si or Y, and A is F, P or Cl); or olivine-based lithium metal phosphate expressed by a chemical formula of Li₁₊ₓM_{1-y}M'_{y}PO_{4-z}X_{z} (here, M is a transition metal, and more particularly, Fe, Mn, Co or Ni, M' is Al, Mg or Ti, X is F, S or N, -0.5≤x≤+0.5, 0≤y≤0.5, and 0≤z≤0.1).

A negative electrode active material may include, for example, carbon such as non-graphitized carbon or graphite-based carbon. The negative electrode active material may include, for example, a metal composite oxide such as LiₓFe₂O₃ (0≤x≤1), LixWO₂ (0≤x≤1), or SnₓMe₁₋ₓMe'_{y}O_{z} (here, Me is Mn, Fe, Pb, or Ge, Me' is Al, B, P, Si, a Group I element, a Group II element or a Group III element of the periodic table, or halogen, 0<x≤1, 1≤y≤3, and 1≤z≤8). The negative electrode active material may include, for example, lithium metal, lithium alloy, silicon-based alloy, and tin-based alloy. The negative electrode active material may include, for example, a metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅. The negative electrode active material may include, for example, a conductive polymer such as polyacetylene, a Li-Co-Ni-based material, etc.

The tapes TF may include double layers. The tapes TFs may include a polyethylene (PE) layers and an ethylene vinyl acetate (EVA) layer. The EVA layer may be an adhesive layer, and the PE layer may be a non-adhesive layer. The tapes TF may be applied to the electrode assembly EA such that the EVA layer is in contact with the electrode assembly EA.

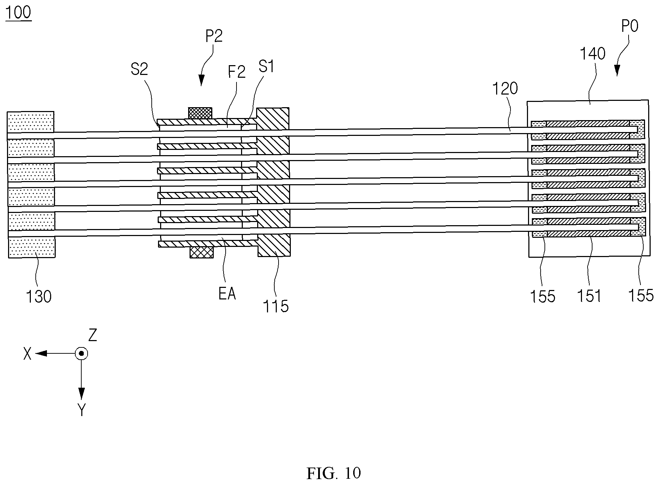

The electrode assembly EA may include a first main surface F1, a second main surface F2 (see FIG. 10), a first side S1, and a second side S2. Each of the plurality of positive electrodes, the plurality of negative electrodes, and the plurality of separators is laminate sheet and generally has a thin thickness of about 1000 µm or less and an area set based on the design of battery cells. The first and second main surfaces F1 and F2 (see FIG. 10) of the electrode assembly (EA) are surfaces that define areas of the plurality of positive electrodes, the plurality of negative electrodes, and the plurality of separators.

Hereinafter, a direction in which the transfer rail 120 extends will be defined as an X-axis direction, and a direction in which the clamping machine 110 and the transfer rail 120 are spaced from each other will be defined as a Z-axis direction. The X-axis direction and the Z-axis direction may be substantially perpendicular to one each other. In addition, a direction substantially perpendicular to each of the X-axis direction and the Z-axis directions will be defined as a Y-axis direction. Unless otherwise stated, the definition of directions also apply to the following drawings. The Z-axis direction may be substantially perpendicular to a base of a space in which the secondary battery manufacturing apparatus 100 is installed.

The clamping machine 110 may be configured to hold the electrode assembly EA such that each of the first main surface F1 and the second main surface F2 (see FIG. 10) is substantially perpendicular to the Z-axis direction. The clamping machine 110 may hold the electrode assembly EA such that the first main surface F1 faces the transfer rail 120 during the applying of the tapes TF to the first main surface F1. Similarly, the clamping machine 110 may hold the electrode assembly EA such that the second main surface F2 (see FIG. 10) faces the transfer rail 120 during the applying of the tapes TF to the second main surface F2.

The clamping machine 110 may include a support 111, a shaft 113, and a clamp 115. The support 111 may support the shaft 113 and the clamp 115.

The shaft 113 may be connected to a driving motor. The shaft 113 may be configured to transmit a driving force of the driving motor to the clamp 115. The clamp 115 may be configured to be rotated around a rotation axis perpendicular to the Y-axis direction by the shaft 113. The clamping machine 110 may be configured to rotate the clamp 115 such that the first main surface F1 faces the transfer rail 120 or such that the second main surface F2 faces the transfer rail 120.

The clamp 115 may be configured to fix the electrode assembly EA. The clamp 115 may have a comb shape. Accordingly, portions of one of the first main surface F1 and the second main surface F2 (see FIG. 10) of the electrode assembly EA fixed by the clamp 115 may be exposed. Tape TFs may be applied to the exposed portions of one of the first main surface F1 and the second main surface F2 (see FIG. 10).

The vision inspection device 130 may be configured to inspect the electrode assembly EA. The vision inspection device 130 may be configured to inspect the exterior of the electrode assembly EA. The vision inspection device 130 may be configured to inspect the alignment of the electrode assembly EA. When a degree of misalignment of the electrode assembly EA exceeds a tolerance, the electrode assembly EA may be realigned with respect to the clamp 115 using a pickup device (or by an operator). When the degree of misalignment of the electrode assembly EA is within a set range, the clamping machine 110 may be driven to align the electrode assembly EA. When the degree of misalignment of the electrode assembly EA is equal to or less than the tolerance, the applying of the tapes TF may be performed directly. The vision inspection device 130 may be configured to inspect defects, e.g., foreign substances, stain, surface defects, stamped marks, potholes, perforations, protrusions, dents, nucleated scratches, or non-nucleated scratch, of the electrode assembly EA.

The vision inspection device 130 may be coupled to the transfer rail 120. The vision inspection device 130 may be configured to move along the transfer rail 120. While the electrode assembly EA is being inspected, the vision inspection device 130 may move to a position overlapping the clamping machine 110 in the Z-axis direction. After the inspection of the electrode assembly EA is completed, the vision inspection device 130 may move to a position that does not overlap the clamping machine 110 in the Z-axis direction.

The tape supply 140 may store a plurality of tapes TF. Before stored in the tape supply 140, the plurality of tapes TF may be unwound from a tape roll and be cut. The tape supply 140 may overlap the transfer rail 120 in the Z-axis direction.

The tape attachment device 150 may be configured to pick up the tapes TF from the tape supply 140. The tape attachment device 150 may be configured to apply the tapes TF to the electrode assembly EA. The tape attachment device 150 may include tape grippers 151, first arms 153, side heaters 155, and second arms 157.

The tape attachment device 150 may be configured to move along the transfer rail 120. The tape attachment device 150 may be configured to move along the transfer rail 120 to a position overlapping the clamping machine 110 or the tape supply 140.

The tape grippers 151 may be configured to apply vacuum pressure to the tapes TF. Accordingly, the tapes TF may be fixed to the tape grippers 151 by the vacuum pressure. The tape grippers 151 may be configured to apply heat to the tapes TF.

The tape grippers 151 may be arranged along the Y-axis direction. In the present example, the clamp 115 may include six fingers and expose five portions of the first main surface F1 (or the second main surface F2 (see FIG. 10)). Five tape grippers 151 may be arranged in the Y-axis direction to correspond to the shape of the clamp 115. Accordingly, the tapes TFs may be simultaneously applied to the portions of the first main surface F1 (or the second main surface F2 (see FIG. 10)) that are exposed by the clamp 115, and productivity in the manufacture of a secondary battery may be improved. Technicians of ordinary skill in the art will be able to easily derive the tape attachment device 150 that includes a clamp 115 with an arbitrary number of fingers and tape grippers 151, the total number of which corresponds to the number of the fingers.

The first arms 153 may be each coupled to the transfer rail 120 and one of the tape grippers 151. The first arms 153 may be configured to move the tape grippers 151 in the Z-axis direction. The first arms 153 may be configured to move the tape grippers 151 relative to the transfer rail 120. That is, the first arms 153 may be configured to move the tape grippers 151 toward the transfer rail 120 or in a direction away from the transfer rail 120.

Accordingly, the tape grippers 151 may perform a biaxial motion. The tape grippers 151 may be moved in the X-axis direction along the transfer rail 120 or be moved in the Z-axis direction by the first arms 153.

The side heaters 155 may be provided at opposite ends (e.g., opposite ends in the X-axis direction) of the tape grippers 151. Each of the side heaters 155 may include a chamfered portion 155CH. The chamfered portion 155CH of each of the side heaters 155 may prevent damage to the tapes TF and the electrode assembly EA when the tapes TF are applied to the sides S1 and S2 of the electrode assembly EA. The chamfered portion 155CH of each of the side heaters 155 may face the tape grippers 151. The chamfered portion 155CH of each of the side heaters 155 may face the tape grippers 151.

The chamfered portion 155CH of each of the side heaters 155 may be formed by trimming sides of each of the side heaters 155. The chamfered portion 155CH of each of the side heaters 155 may include a straight cross-section or a round cross-section.

The second arms 157 may be each coupled to the transfer rail 120 and one of the side heaters 155. The second arms 157 may be configured to move the side heaters 155 in the Z-axis direction. The side heaters 155 may be moved simultaneously or separately with the tape grippers 151.

The second arms 157 may be configured to move the side heaters 155 relative to the transfer rail 120. That is, the second arms 157 may be configured to move the side heaters 155 toward the transfer rail 120 or in a direction away from the transfer rail 120.

The side heaters 155 may perform biaxial motion similar to the tape grippers 151. The side heaters 155 may be moved in the X direction along the transfer rail 120 or be moved in the Z-axis direction by the second arms 157.

The secondary battery manufacturing apparatus 100 may include a controller configured to control the operation of the clamping machine 110, the operation of the vision inspection device 130, and the operation of the tape attachment device 150. The controller may be configured to control the operation of the clamping machine 110, the operation of the vision inspection device 130, and the operation of the tape attachment device 150, based on a preset process recipe. The controller may be configured to generate signals for controlling rotation and alignment of the clamp 115 of the clamping machine 110, inspection to be performed by the vision inspection device 130, and fixing, transfer, and attachment of the tapes TF using the tape attachment device 150.

The controller may be a computing device such as a workstation computer, a desktop computer, a laptop computer, or a tablet computer. The controller may be configured as a separate hardware component or may be separate software included in each hardware component. The controller may be a simple controller, a microprocessor, a complex processor such as a CPU or a GPU, a processor configured by software, dedicated hardware, or firmware. The controller may be implemented, for example, by a general-purpose computer or application-specific hardware such as a digital signal process (DSP), a field-programmable gate array (FPGA) or an application-specific integrated circuit (ASIC).

According to some aspects, an operation of the controller may be implemented by instructions stored in a machine-readable medium that is readable and executable by one or more processors. Here, the machine-readable medium may include an arbitrary mechanism for storing and/or transmitting information in a form readable by a machine (e.g., a computing device). For example, machine-readable media may include a read-only memory (ROM), a random access memory (RAM), magnetic disk storage media, optical storage media, flash memory devices, electrical, optical, acoustic, or other types of radio signals (e.g., carrier waves, infrared signals, digital signals, etc.), and other signals.

Firmware, software, routines, and instructions may be configured to perform the operation described above with respect to the controller or a process to be described below. However, the above description is provided only for convenience of description, and it should be understood that the above-described operation of the controller may be performed by a computing device, a processor, a controller, or other devices for executing firmware, software, routines, instructions, etc.

### (Second Aspect)

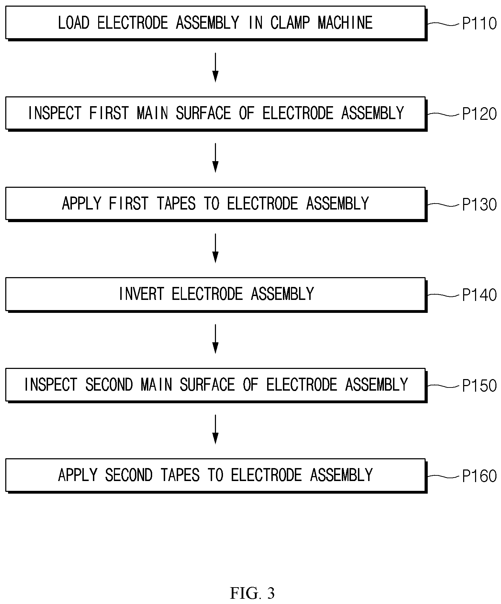

FIG. 3 is a flowchart of a method of manufacturing a secondary battery according to aspects.

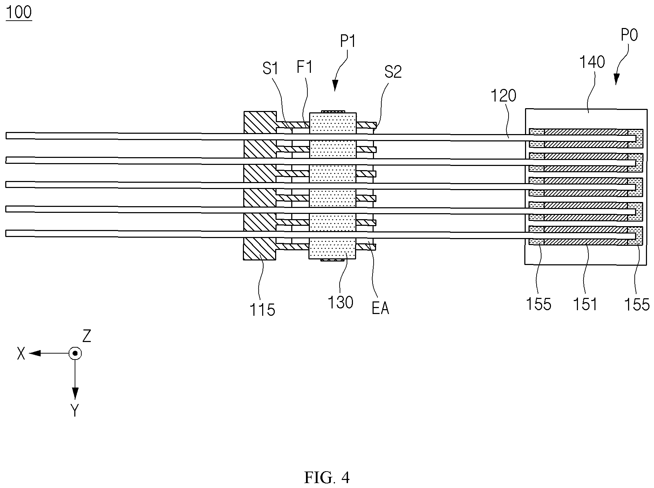

FIG. 4 is a plan view for describing a secondary battery manufacturing method according to example aspects.

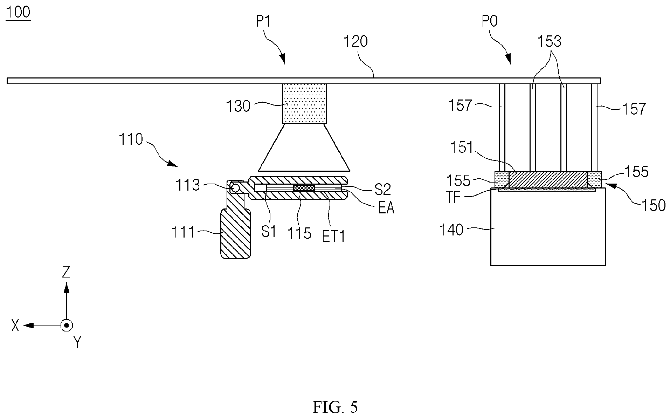

FIG. 5 is a side view for describing a secondary battery manufacturing method according to example aspects.

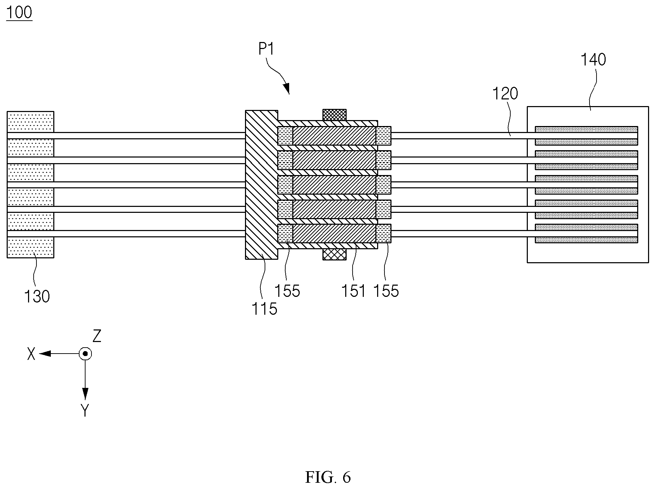

FIG. 6 is a plan view for describing a secondary battery manufacturing method according to example aspects.

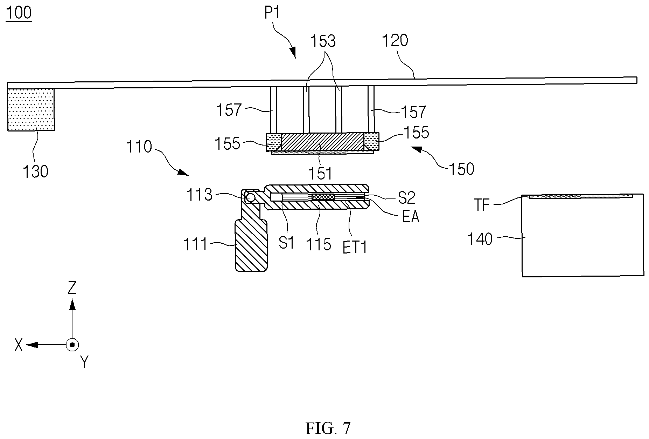

FIG. 7, FIG. 8, and FIG. 9 are side views for describing a secondary battery manufacturing method according to example aspects.

FIG. 10 is a plan view for describing a secondary battery manufacturing method according to example aspects.

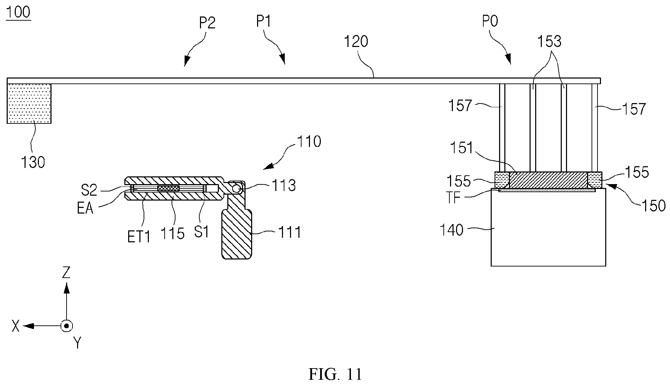

FIG. 11 is a side view for describing a secondary battery manufacturing method according to example aspects.

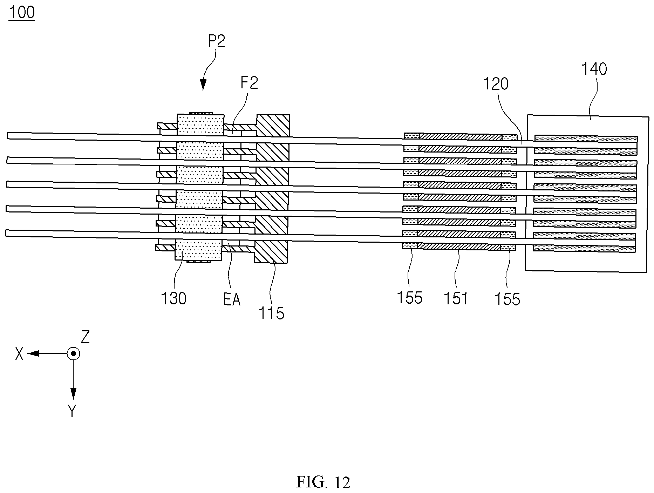

FIG. 12 is a plan view for describing a secondary battery manufacturing method according to example aspects.

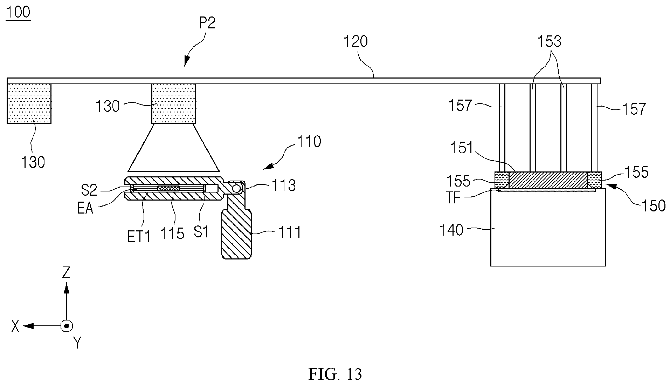

FIG. 13 is a side view for describing a secondary battery manufacturing method according to example aspects.

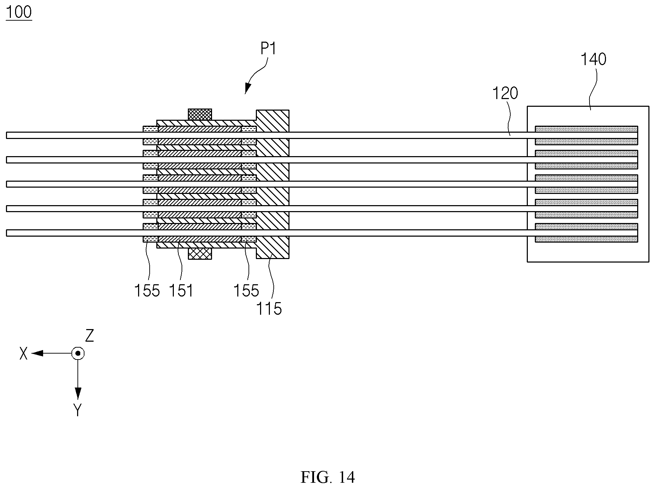

FIG. 14 is a plan view for describing a secondary battery manufacturing method according to example aspects.

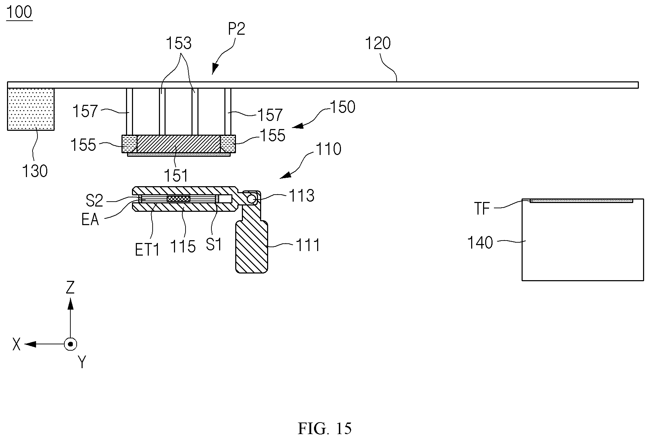

FIG. 15, FIG. 16, and FIG. 17 are side views for describing a secondary battery manufacturing method according to example aspects.

Referring to FIG. 1, FIG. 2, and FIG. 3, in P110, the electrode assembly EA may be loaded into the clamping machine 110. The loading of the electrode assembly EA may include clamping and aligning the electrode assembly EA. The clamping machine 110 may be a multi-joint robot. The clamp 115 may be configured to be rotated in a direction substantially parallel to the Z-axis direction, in addition to being rotated about an axis substantially parallel to the Y-axis direction by the shaft 113. Furthermore, the clamp 115 may be translated in the X-axis direction, the Y-axis direction, and the Z-axis direction. The first main surface F1 of the electrode assembly EA loaded in the clamping machine 110 may face the transfer rail 120.

Next, referring to FIG. 3, FIG. 4, and FIG. 5, in P120, the first main surface F1 of the electrode assembly EA may be inspected. The first main surface F1 may be inspected by the vision inspection device 130. The vision inspection device 130 may move along the transfer rail 120 to a position P1 overlapping the clamping machine 110, which holds the electrode assembly EA, in the Z-axis direction. The vision inspection device 130 may be configured to perform an image-based inspection. The vision inspection device 130 may be configured to determine defects and misalignment of the electrode assembly EA, based on one of a change in a reflectance distribution in an image of the electrode assembly EA and a comparison between a standard image and the image of the electrode assembly EA.

While inspection is performed by the vision inspection device 130, the tape attachment device 150 may move to a position P0 overlapping the tape supply 140 in the Z-axis direction. The first and second arms 153 and 157 may move the tape grippers 151 and the side heaters 155 toward the tape supply 140. The tape grippers 151 when moved close to the tapes TF may apply vacuum pressure to the tapes TF to pick up the tapes TF. Unlike that shown in FIG. 5, only the tape grippers 151 may approach the tapes TF while the side heaters 155 are stopped. The tapes TF may be picked up by the tape attachment device 150 after the inspection of the first main surface F1 is completed.

Next, referring to FIG. 3, FIG. 6, and FIG. 7, in P130, the tapes TF may be applied to the first main surface F1 and the sides S1 and S2 of the electrode assembly EA. Each of the tapes TF applied to the first main surface F1 and the sides S1 and S2 of the electrode assembly EA may be referred to as a first tape. The tape attachment device 150 picking up the tapes TF may move to the first position P1 along the transfer rail 120.

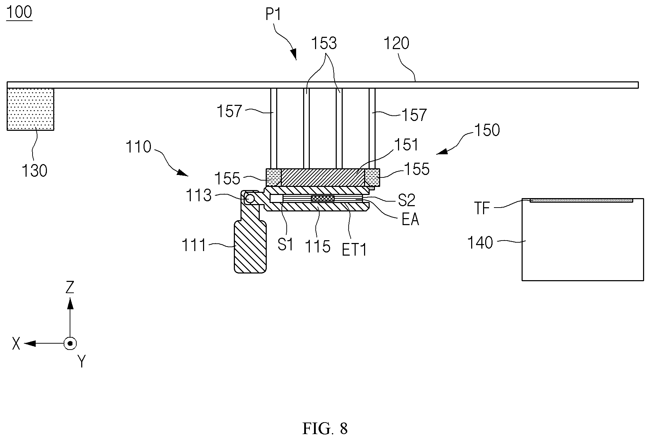

Then, referring to FIG. 8, the first and second arms 153 and 157 may move the tape grippers 151 and the side heaters 155 in the Z-axis direction. Accordingly, the tape grippers 151 and the side heaters 155 may approach the electrode assembly EA clamped by the clamping machine 110. The tape grippers 151 and the side heaters 155 may approach the electrode assembly EA such that the tapes TF are in contact with the first main surface F1 of the electrode assembly EA.

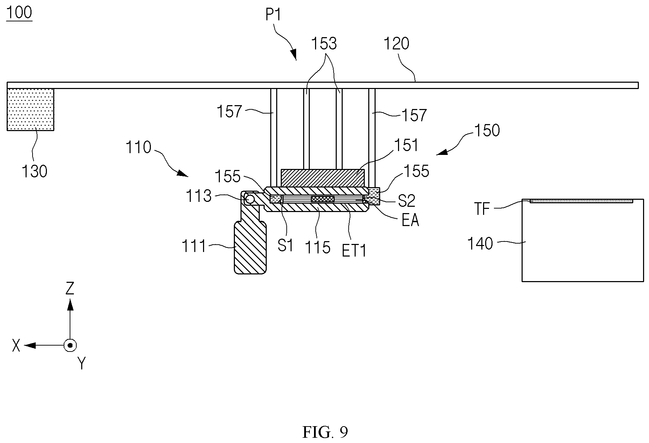

Next, referring to FIG. 9, the second arms 157 may move the side heaters 155 such that the tapes TF are in contact with the sides S1 and S2 of the electrode assembly EA. Accordingly, the distance between the transfer rail 120 and the side heaters 155 in the Z-axis direction may be greater than the distance between the transfer rail 120 and the tape grippers 151 in the Z-axis direction.

The tape gripper 151 and the side heaters 155 may each include an electric heater. The tape gripper 151 and the side heaters 155 may be configured to apply heat to the tapes TF. EVA layers of the tapes TF when heated may have adhesive properties, and thus, the tapes TF may be adhered to the first main surface F1 and the sides S1 and S2 of the electrode assembly EA. Chamfered portions 155CH of the side heaters 155 may prevent damage to the tapes TF and the sides S1 and S2 of the electrode assembly EA while the tapes TF are adhered to the sides S1 and S2 of the electrode assembly EA.

Next, referring to FIG. 3, FIG. 10, and FIG. 11, in P140, the electrode assembly EA may be inverted. The electrode assembly EA may be inverted by driving the clamp 115 by the shaft 113, and thus, the second main surface F2 of the electrode assembly EA may face the transfer rail 120. A position of the transfer rail 120 facing the second main surface F2 of the electrode assembly EA may be a position P2. The position P2 may overlap the electrode assembly EA in the Z-axis direction.

Before driving the clamp 115 to invert the electrode assembly EA, the tape attachment device 150 may be moved away from the position P1 to prevent interference with the clamp 115. The tape attachment device 150 may be moved to, for example, the position P0.

Next, referring to FIG. 3, FIG. 12, and FIG. 13, in P150, the second main surface F2 of the electrode assembly EA may be inspected. The inspection in P150 is substantially the same as the inspection in P120 and thus is not described again here. The tape attachment device 150 may pick up the tapes TF during or after the inspection of P150.

Subsequently, referring to FIG. 3, FIG. 14, and FIG. 15, in P160, the tapes TF may be applied to the second main surface F1 and the sides S1 and S2 of the electrode assembly EA. Each of the tapes TF applied to the second main surface F2 and the sides S1 and S2 of the electrode assembly EA may be referred to as a second tape. The tape attachment device 150 picking up the tapes TF may move to the second position P2 along the transfer rail 120.

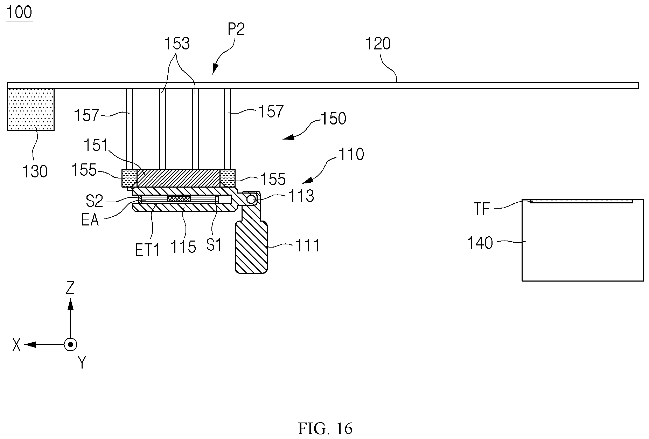

Next, referring to FIG. 16, the first and second arms 153 and 157 may move the tape grippers 151 and the side heaters 155 in the Z-axis direction. Accordingly, the tape grippers 151 and the side heaters 155 may approach the electrode assembly EA clamped by the clamping machine 110. The tape grippers 151 and the side heaters 155 may approach the electrode assembly EA such that the tapes TF are in contact with the second main surface F2 of the electrode assembly EA.

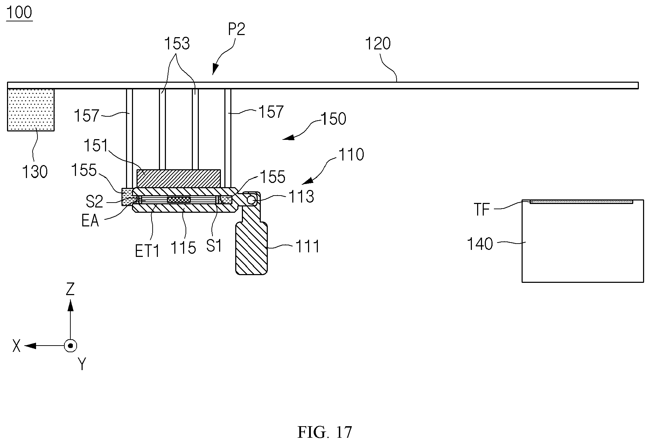

Next, referring to FIG. 17, the second arms 157 may move the side heaters 155 such that the tapes TF are in contact with the sides S1 and S2 of the electrode assembly EA. Accordingly, the distance between the transfer rail 120 and the side heaters 155 in the Z-axis direction may be greater than the distance between the transfer rail 120 and the tape grippers 151 in the Z-axis direction.

The tape gripper 151 and the side heaters 155 may each include an electric heater. The tape gripper 151 and the side heaters 155 may be configured to apply heat to the tapes TF. The EVA layers of the tapes TF when heated may have adhesive properties, and thus, the tapes TF may be adhered to the second main surface F2 and the sides S1 and S2 of the electrode assembly EA. The chamfered portions 155CH of the side heaters 155 may prevent damage to the tapes TF and the sides S1 and S2 of the electrode assembly EA while the tapes TF are adhered to the sides S1 and S2 of the electrode assembly EA.

The tapes TF adhered to the first main surface F1 and the sides S1 and S2, and the tapes TF adhered to the second main surface F2 and the sides S1 and S2 may surround the electrode assembly EA, thereby improving mechanical robustness and electrical reliability of the electrode assembly EA.

A conventional tape attachment device includes tapes and a roller for pressing an electrode assembly. Accordingly, excessive pressure may be applied to electrodes and the tapes, and the electrode assembly and the tape may be damaged during a tape attachment process.

According to example aspects, the secondary battery manufacturing apparatus 100 may invert the electrode assembly EA to apply the tapes TF to the first main surface F1 (see FIG. 1) of the electrode assembly EA and the second main surface F2 of the electrode assembly EA through separate processes. Accordingly, it is possible to prevent excessive pressure from being applied to the electrode assembly EA and the tapes TF, and increase reliability and yield in the manufacture of a secondary battery.

### (Third Aspect)

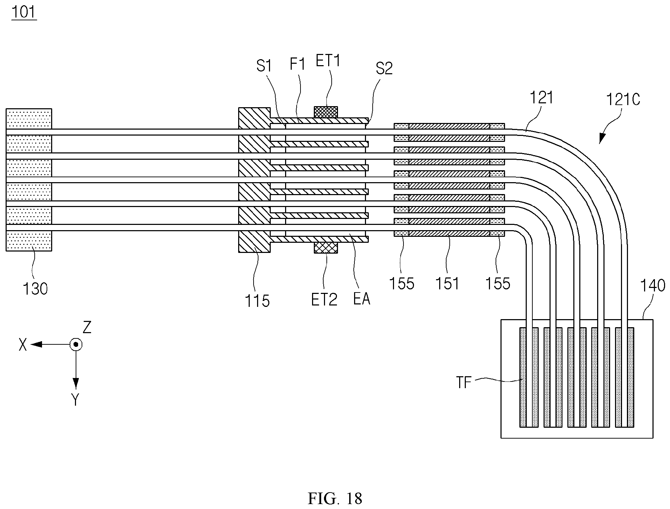

FIG. 18 is a plan view for describing a secondary battery manufacturing apparatus 101 according to example aspects.

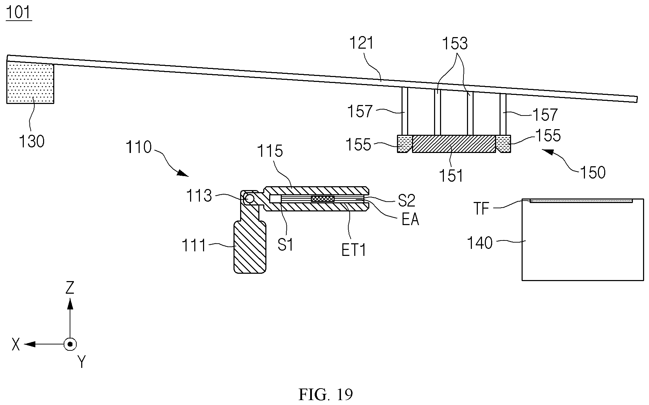

FIG. 19 is a side view for describing the secondary battery manufacturing apparatus 101 according to example aspects.

Referring to FIG. 18 and FIG. 19, the secondary battery manufacturing apparatus 101 may include a clamping machine 110, a transfer rail 121, a vision inspection device 130, a tape supply 140, and a tape attachment device 150. The clamping machine 110, the vision inspection device 130, the tape supply 140, and the tape attachment device 150 are substantially the same as those described above with reference to FIG. 1 and FIG. 2 and thus redundant description thereof is omitted here.

According to example aspects, the transfer rail 121 may include a curved section 121C and a slope. Thus, the transfer rail 121 may include a part substantially parallel to the X-axis direction and a part substantially parallel to the Y-axis direction. The slope may be a slope on a bottom surface of a space in which the secondary battery manufacturing apparatus 101 is installed.

In the present example, the movement of the tape attachment device 150 is involved with only a degree of freedom along the transfer rail 121 and a degree of freedom of movement relative to the transfer rail 121 by first and second arms 153 and 157 and thus may be referred to as substantially a biaxial motion.

According to example aspects, the transfer rail 121 of the secondary battery manufacturing apparatus 101 includes the slope and the curved section 121C. Accordingly, the arrangement of the components of the secondary battery manufacturing apparatus 101 may be variously changed according to characteristics of a space of a line at which the secondary battery manufacturing apparatus 101 is installed, and a degree of freedom in line design may be improved.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A secondary battery manufacturing apparatus comprising:
a clamping machine with a clamp configured to fix an electrode assembly;
a transfer rail overlapping the clamping machine; and
a tape attachment device coupled to the transfer rail and configured to move along the transfer rail, wherein the tape attachment device comprises:
a tape gripper configured to apply vacuum pressure to a tape; and
side heaters adjacent to ends of the tape gripper.

2. The secondary battery manufacturing apparatus of claim **1,** wherein the clamping machine further includes a shaft coupled to the clamp and configured to rotate the clamp.

3. The secondary battery manufacturing apparatus of claim **1,** wherein the clamping machine is configured to rotate the clamp such that one of a first or a second main surfaces of the electrode assembly faces the transfer rail.

4. The secondary battery manufacturing apparatus of claim **1,** further comprising a vision inspection device configured to inspect an exterior of the electrode assembly.

5. The secondary battery manufacturing apparatus of claim 4, wherein the vision inspection device is coupled to the transfer rail.

6. The secondary battery manufacturing apparatus of claim 1, further comprising a tape supply overlapping the transfer rail, spaced apart from the clamping machine, and configured to store the tape.

7. The secondary battery manufacturing apparatus of claim 1, wherein the tape attachment device comprises:
first arms configured to move the tape gripper relative to the transfer rail; and
second arms configured to move the side heaters relative to the transfer rail.

8. The secondary battery manufacturing apparatus of claim 7, wherein the second arms are configured to move the side heaters such that a distance between the side heaters and the transfer rail is greater than a distance between the tape gripper and the transfer rail.

9. The secondary battery manufacturing apparatus of claim 1, wherein the side heaters are configured to press the tape and the sides of the electrode assembly such that the tape is in contact with the sides of the electrode assembly, and to heat the tape on the sides of the electrode assembly.

10. The secondary battery manufacturing apparatus of claim 1, wherein each of the side heaters includes a chamfered portion.

11. The secondary battery manufacturing apparatus of claim 10, wherein the chamfered portion of each of the side heaters faces the tape gripper.

12. The secondary battery manufacturing apparatus of claim 1, wherein the tape gripper is configured to press the tape and a first main surface of the electrode assembly such that the tape is in contact with the first main surface of the electrode assembly, and wherein the tape gripper is also configured to heat the tape in contact with the first main surface of the electrode assembly.
